# EUROPEAN PATENT SPECIFICATION

(11) **EP 4 511 182 B1**
(45) Date of publication and mention of the grant of the patent: **29.04.2026**
(21) Application number: 23720694.1
(22) Date of filing: 13.04.2023
(51) Int. Cl.: B21B 31/07, F16C 17/02, F16C 17/24

(54) **BEARING TEMPERATURE REDUCTION THROUGH SLEEVE MODIFICATION**
LAGERTEMPERATURVERRINGERUNG DURCH HÜLSENMODIFIKATION
RÉDUCTION DE TEMPÉRATURE DE PALIER PAR MODIFICATION DE MANCHON

(30) Priority: 20.04.2022 WO PCT/US2022/025535
(43) Date of publication of application: 26.02.2025
(73) Proprietor: Primetals Technologies USA LLC, Alpharetta, GA 30005 (US)
(72) Inventor: WOJTKOWSKI, Thomas, C., Jr., Sutton, MA 01590 (US); SCHEFFLER, Kenneth, R., Dudley, MA 01571 (US); OSGOOD, Peter, N., Westborough, MA 01581 (US); GOW, Ian, Worcester, MA 01602 (US); WINSLOW, Earl, S., Jr., Grafton, MA 01519 (US)
(74) Representative: Metals@Linz
(86) International application number: PCT/US2023/018406
(87) International publication number: WO 2023/205021

(56) References cited:
- EP-A1- 2 858 767
- EP-A2- 1 213 061
- US-A- 3 453 031
- US-A- 4 772 137

## Description

### BACKGROUND OF THE INVENTION

### Field of Invention

The present invention relates generally to the field of rolling mill back-up bearings, particularly oil film back-up bearings. More specifically, the present invention is related to the improvement of the temperature profile within the bearings during operation.

### Discussion of Related Art

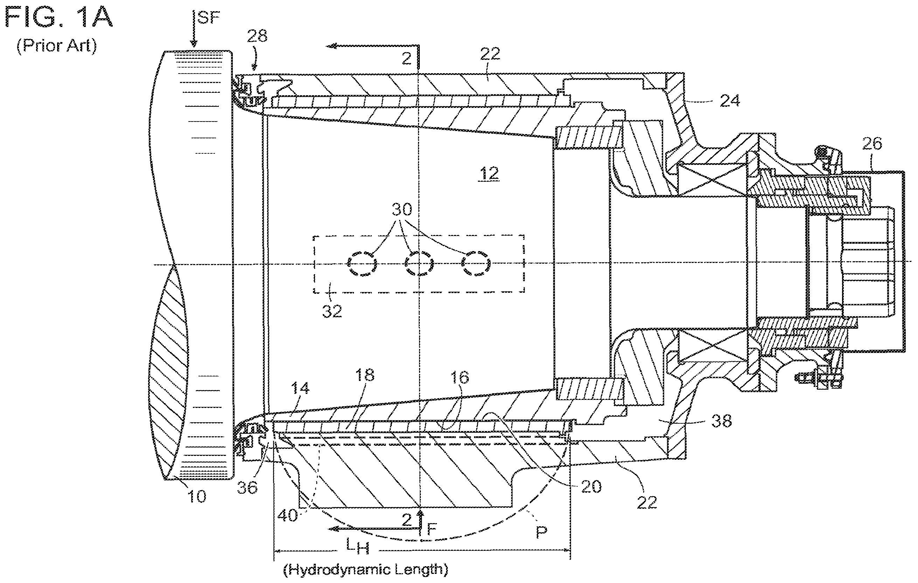

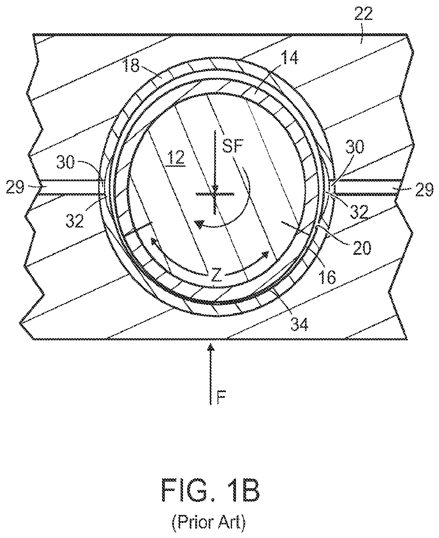

FIGS. 1A-B depict a known oil film bearing assembly as described in US Patent 4,772,137. The standard in the industry is a cylindrical bushing (sometimes known as the bearing) and a cylindrical outer diameter / tapered inner diameter sleeve (sometimes known as the journal). The bushing has a close fit cylindrical outside diameter within the chock (the bearing housing) and the sleeve has an inner taper angle that exactly matches the roll.

The '137 patent describes a typical rolling mill oil film bearing as follows. The roll **10** has a neck section **12.** The neck section **12** may be conical, as shown in FIG. 1(A), or it may be cylindrical in some alternate configurations. A sleeve **14** is received on and fixed relative to the neck section **12.** The exterior of the sleeve defines the journal surface **16** of the roll neck. A bushing **18** has an internal bearing surface **20** surrounding and rotatably supporting the journal surface **16.** The bushing is contained by and fixed within a chock **22.** The chock is closed at the outboard end by an end plate **24** and cover **26.** A seal assembly **28** is provided between the roll and the inboard end of the chock **22.**

During normal operation of the mill, when the roll is rotating at adequate speeds for full hydrodynamic operation, a continuous flow of oil is fed through one of the sets of passageways **29** in the chock, feed openings **30** in the bushing and rebores **32** in the bearing surface **20.** From here, the oil enters between the bearing surface **20** and the rotating j ournal surface **16** to form a hydrodynamically maintained somewhat wedge-shaped oil film **34** by the bearing load zone "Z" and the hydrodynamic length "L_{H}", the length of the bushing that interacts with the sleeve and supports the oil film. In FIG. 1(A), the load is applied through the roll at "SF". The load is resisted by a force on the chock "F". The load zone is located on the same side as the resisting force "F". The pressure profile at the load zone is schematically depicted in FIG. 1(A) at "P".

Conventional hydrostatic means are employed to create the necessary oil film between the journal and bearing surfaces when the roll is either not rotating or rotating at a speed slower than that required to create and maintain the hydrodynamic oil film **34.**

Oil is continuously drained from between the journal and bearing surfaces **16, 20** at both the inboard and outboard ends of the load zone. The oil draining from the inboard end enters an inboard sump **36** enclosed by the seal assembly **28** and the adjacent surfaces of the chock, bushing and roll. Oil draining from the outboard end enters an outboard sump **38** enclosed by the end plate **24** and chock **22.** The sumps **36, 38** are interconnected by one or more passageways **40** drilled through the chock, and the outboard sump **38** is connected to a conventional lubrication system (not shown) which filters, cools and recirculates the oil back to the bearing for reintroduction between the bearing and journal surfaces **16, 20.**

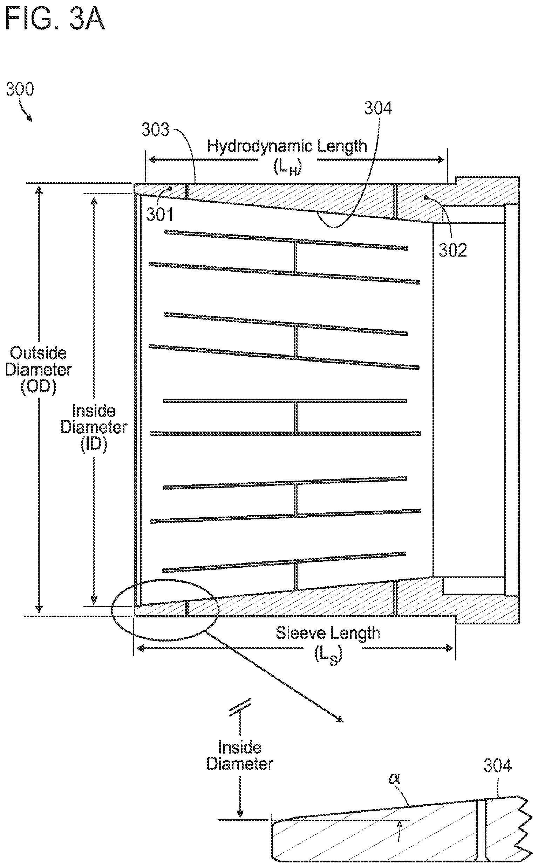

A conventional sleeve as used on a roll in a rolling mill is shown at **300** in FIG. 3(A). The sleeve having an inboard end **301** and an outboard end **302,** the sleeve comprising: (a) an outer surface **303** shaped like a cylinder having a sleeve length *L_{S}* and diameter *OD* with a portion of the sleeve length generating the oil film designated as the hydrodynamic length L_{H}, (b) an inner surface **304** shaped like a cone comprised of an inside diameter *ID* at the inboard end and a standard taper angle a. The inner surface 304 can also be alternately shaped like a cylinder in some alternate configurations.

Embodiments of the present invention are an improvement over prior art systems.

### SUMMARY OF THE INVENTION

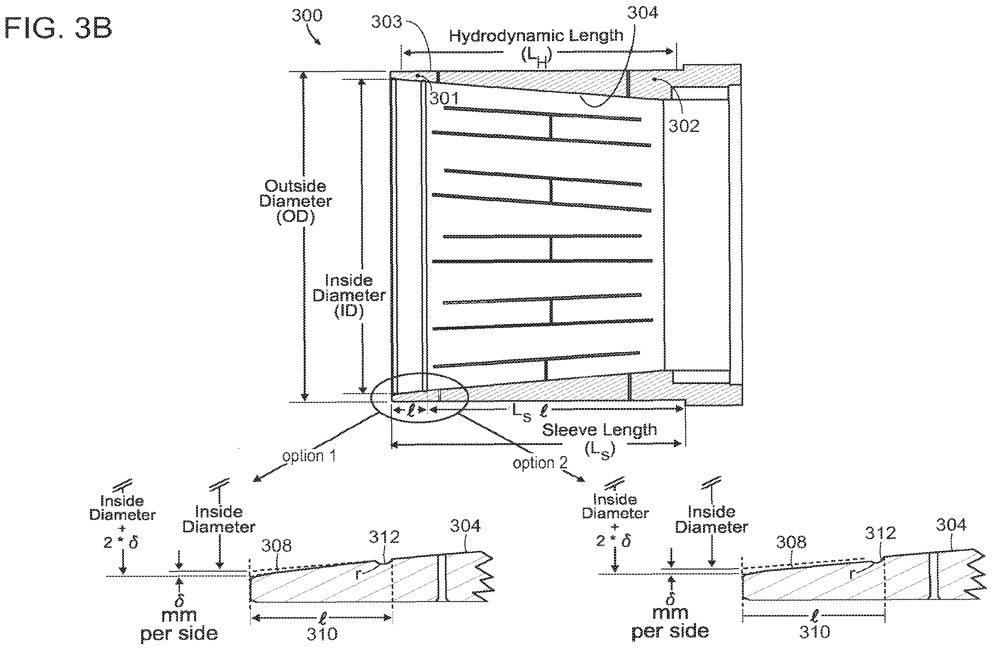

In one embodiment, FIG. 3B option 1, the present invention provides a sleeve for use in a roll in a rolling mill, the sleeve having an inboard end and an outboard end, the sleeve comprising: (a) an outer surface shaped like a cylinder having sleeve length *L_{S},* hydrodynamic length *L_{H},* and outside diameter *OD,* and (b) an inner surface having an inside diameter *ID* at the inboard end and a taper angle ***α,*** the inner surface comprising: (1) a first portion of length *(L_{S} - ℓ)*, the first portion conically shaped having a first ramp portion, the first portion and the first ramp portion having the taper angle **α,** and (2) a second portion of length ℓ, the second portion comprising: (i) an undercut portion having an undercut radius, **r,** the undercut portion located adjacent to an end of the first portion that is proximate to the inboard end; (ii) a second ramp portion located adjacent to the undercut portion, the second ramp portion tapered by an amount *δ* in addition to the taper angle ***α*** and wherein the second ramp portion allows the sleeve to deflect as load increases at a maximum radial deflection of *δ*. In one embodiment, not covered by the present invention, *δ* is defined as (Bearing Load Rating {F in metric tons} / Hydrodynamic Length {L_{H} in mm}) * **a** wherein **a** is picked to be in the range 0.02 ≤ **a** ≤ 0.04 with **a** preferable 0.025. In the same embodiment, a value of ℓ is defined as **b** * Hydrodynamic Length {Lu}, wherein **b** is picked to be within the range 20% ≤ **b** ≤ 35% with **b** preferable 25%. In the same embodiment, length *(L_{S} - ℓ) >* length ℓ. In the same embodiment, the undercut radius **r** is defined as **c** * length ℓ wherein **c,** is picked to be in the range 2% ≤ **c** ≤ 10% with **c** preferable 5%.

In another embodiment, FIG. 3B option 2, the present invention provides a sleeve for use in a roll in a rolling mill, the sleeve having an inboard end and an outboard end, the sleeve comprising: (a) an outer surface shaped like a cylinder having sleeve length *L_{S},* hydrodynamic length *L_{H}* and outside diameter *OD;* and (b) an inner surface having an inside diameter *ID* at the inboard end and a taper angle*α*, the inner surface comprising: (1) a first portion of length *(L_{S} - ℓ*), the first portion conically shaped having a first ramp portion; and (2) a second portion of length ℓ, wherein the second portion comprises an undercut radius, r, wherein a full length ℓ of the second portion is undercut by a constant amount *δ.* In one embodiment, not covered by the present invention, δ is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} -* ℓ) > length *ℓ*. In the same embodiment, the undercut radius **r** is defined as **c** * length *ℓ* wherein **c,** is picked to be in the range 2% ≤ **c** ≤ 10% with **c** preferable 5%.

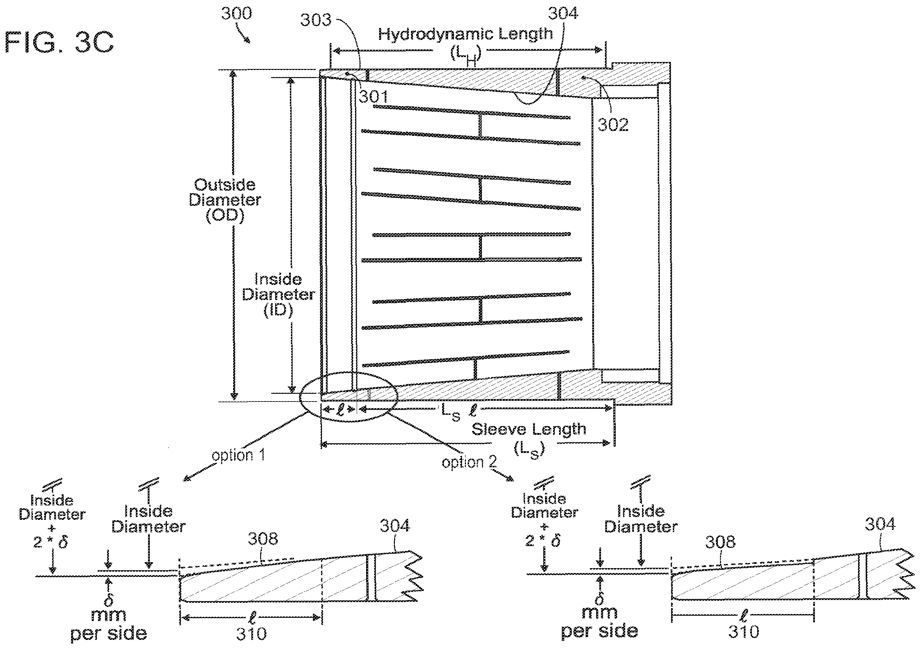

In yet another embodiment, FIG. 3(C) option 1, the present invention provides a sleeve for use in a roll in a rolling mill, the sleeve having an inboard end and an outboard end, the sleeve comprising: (a) an outer surface shaped like a cylinder having sleeve length *L_{S} ,* hydrodynamic length *L_{H},* and outside diameter OD; (b) an inner surface having of an inside diameter *ID* at the inboard end and a taper angle***α***, the inner surface comprising: (1) a first portion of length *(L_{S} -* ℓ), the first portion conically shaped having a first ramp portion, the first portion and the first ramp portion having the taper angle **α;** and (2) a second portion of length ℓ, the second portion comprising a second ramp portion located adjacent to the first ramp portion and the second ramp portion (308) tapered by an amount δ in addition to the taper angle **α,** wherein the second ramp portion allows the sleeve to deflect as load increases at a maximum radial deflection of *δ.* In one embodiment, not covered by the present invention, δ is defined as ( Bearing Load Rating {F in metric tons} / Hydrodynamic Length { L_{H} in mm} ) * **a** wherein **a** is picked to be in the range 0.02 ≤ **a ≤** 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length ℓ.

In another embodiment, FIG. 3(C) option 2, the present invention provides a sleeve for use in a roll in a rolling mill, the sleeve having an inboard end and an outboard end, the sleeve comprising: (a) an outer surface shaped like a cylinder having sleeve length *L_{S},* a hydrodynamic length *L_{H},* and outside diameter *OD;* (b) an inner surface having of an inside diameter *ID* at the inboard end and a taper angle*α*, the inner surface comprising: (1) a first portion of length *(L_{S} - ℓ*), the first portion conically shaped having a first ramp portion; and (2) a second portion of length *ℓ*, wherein a full length ℓ of the second portion is undercut by a constant amount *δ.* In one embodiment, not covered by the present invention, *δ* is defined as (Bearing Load Rating {F in metric tons} / Hydrodynamic Length {L_{H} in mm}) * **a** wherein **a** is picked to be in the range 0.02 ≤ **a ≤** 0.04 with **a** preferable 0.025. In the same embodiment, a value of ℓ is defined as **b** * Hydrodynamic Length {Lu}, wherein **b** is picked to be within the range 20% ≤ **b** ≤ 35% with **b** preferable 25%. In the same embodiment, length *(L_{S} - ℓ) >* length ℓ.

In yet another embodiment, not covered by the present invention, FIG. 3(B) option 1, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* outer diameter *OD,* and hydrodynamic length *L_{H};* and (b) provisioning an inner surface comprising: (1) a first portion of length *(L_{S} -* ℓ*)*, the first portion conically shaped having a first ramp portion; and (2) a second portion of length ℓ, the second portion comprising: (i) an undercut portion having an undercut radius, **r,** the undercut portion located adjacent to an end of the first portion that is proximate to the inboard end; (ii) a second ramp portion located adjacent to the undercut portion, and wherein the second ramp portion allows the sleeve to deflect as load increases at a maximum radial deflection of *δ.* In one embodiment, δ is defined as ( Bearing Load Rating {F in metric tons} / Hydrodynamic Length {L_{H} in mm} ) * **a** wherein **a,** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length ℓ. In the same embodiment, the undercut radius, **r,** is defined as **c** * length ℓ wherein **c,** is picked to be in the range 2% ≤ **c** ≤ 10% with **c** preferable 5%.

In another embodiment, not covered by the present invention, FIG. 3(B) option 2, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* hydrodynamic length *L_{H}* and outside diameter *OD;* and (b) provisioning an inner surface having of an inside diameter *ID* at the inboard end and a taper angle*α*, the inner surface comprising: (1) a first portion of length *(L_{S} -* ℓ*)*, the first portion conically shaped having a first ramp portion; and (2) a second portion of length *ℓ*, wherein the second portion comprises an undercut radius, r, wherein a full length ℓ of the second portion is undercut by a constant amount *δ.* In one embodiment, δ is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*. In the same embodiment, the undercut radius **r** is defined as **c** * length ℓ wherein **c,** is picked to be in the range 2% ≤ **c** ≤ 10% with **c** preferable 5%.

In yet another embodiment, not covered by the present invention, FIG. 3(C) option 1, provides a method for lowering temperature build-up on an inboard side of a sleeve, the sleeve used in a roll in a rolling mill, the sleeve having an inboard end and an outboard end, the method comprising: (a) an outer surface shaped like a cylinder having sleeve length *L_{S} ,* hydrodynamic length *L_{H},* and outside diameter *OD;* (b) an inner surface having of an inside diameter *ID* at the inboard end and a taper angle ***α,*** the inner surface comprising: (1) a first portion of length *(L_{S} -* ℓ*)*, the first portion conically shaped having a first ramp portion; and (2) a second portion of length ℓ, the second portion comprising a second ramp portion located adjacent to the first ramp portion, wherein the second ramp portion allows the sleeve to deflect as load increases at a maximum radial deflection of *δ.* In one embodiment, δ is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S}* - *ℓ)* > length ℓ.

In another embodiment, not covered by the present invention, FIG. 3(C) option 2, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* a hydrodynamic length *L_{H},* and outside diameter *OD;* (b) provisioning an inner surface having of an inside diameter *ID* at the inboard end and a taper angle ***α*,** the inner surface comprising: (1) a first portion of length *(L_{S}- ℓ*), the first portion conically shaped having a first ramp portion; and (2) a second portion of length ℓ, wherein a full length ℓ of the second portion is undercut by a constant amount *δ.* In one embodiment, *δ* is defined as (Bearing Load Rating {F in metric tons} / Hydrodynamic Length {L_{H} in mm}) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*.

### BRIEF DESCRIPTION OF THE DRAWINGS

The present disclosure, in accordance with one or more various examples, is described in detail with reference to the following figures. The drawings are provided for purposes of illustration only and merely depict examples of the disclosure. These drawings are provided to facilitate the reader's understanding of the disclosure and should not be considered limiting of the breadth, scope, or applicability of the disclosure. It should be noted that for clarity and ease of illustration these drawings are not necessarily made to scale.
FIGS. 1(A)-(B) depict a known hydrodynamic bearing assembly.
FIGS. 2(A)-(C) depict temperature distribution on the sleeve and bushing at the indicated load/speed combinations.
FIGS. 3(A)-(C) depict a standard sleeve and then illustrate several embodiments of the present invention depicting features that are added to the sleeve.

### DESCRIPTION OF THE PREFERRED EMBODIMENTS

While this invention is illustrated and described in a preferred embodiment, the invention may be produced in many different configurations within the scope defined by the appended claims. There is depicted in the drawings, and will herein be described in detail, a preferred embodiment of the invention, with the understanding that the present disclosure is to be considered as an exemplification of the principles of the invention and the associated functional specifications for its construction and is not intended to limit the invention to the embodiment illustrated. Those skilled in the art will envision many other possible variations within the scope of the present invention as defined by the appended claims.

Testing of the bearing under various load and speed combinations has shown that the oil film thickness at the inboard side of the bearing (side nearest the roll face) is thinner than that at the outboard end. The difference is typically between 0.05 mm and 0.10 mm. Since the oil film is thinner on the inboard end, the shear rate in the oil film is higher and the bearing and sleeve temperature are also increased.

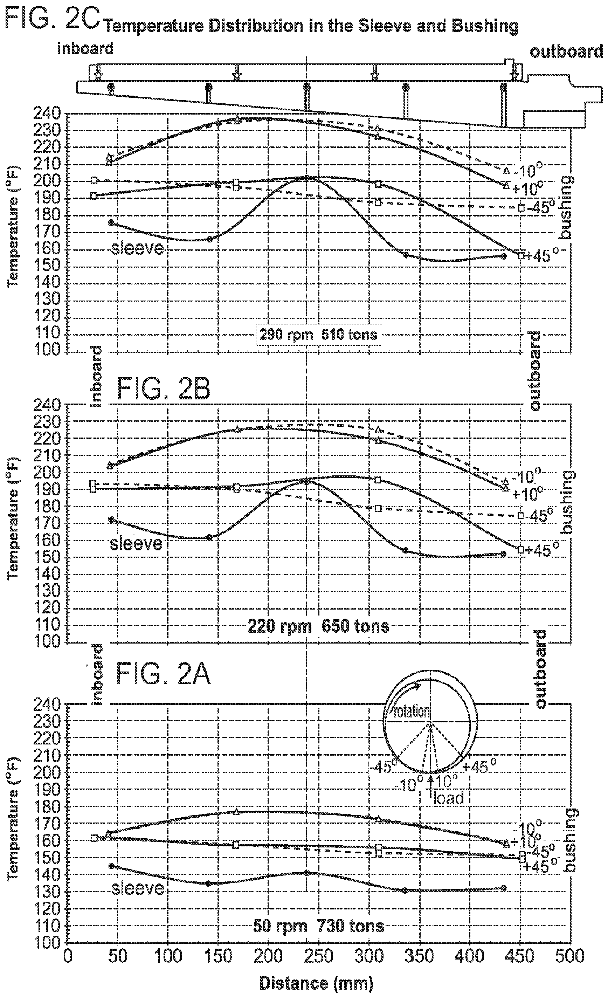

FIGS. 2(A) through 2(C) show graphs of temperature distribution in the sleeve and bushing at the indicated load/speed combinations (i.e., at 50 RPM & 730 tons, 220 RPM & 650 tons, and 290 RPM & 510 tons, respectively). This data was obtained through testing with a full size 30"-75 KL Morgoil hydrodynamic bearing. Thermocouples were installed in the bushing and sleeve. The sleeve had five thermocouples installed in an axial line and since the sleeve rotates the signal was brought out through a slip ring. The fixed bushing has four axial rows of four thermocouples, two rows at +/-10 degrees and two rows at +/-45 degrees from bottom dead center. In the diagram at the top of FIG. 2(C), the bushing thermocouple locations are denoted by a white star and the sleeve thermocouple locations are denoted by a black circle.

It can be seen from FIGS. 2(A) through 2(C) that the temperature at the inboard side of the bushing and sleeve is higher for all load/speed combinations, particularly in the load zone (+/- 10 degrees in the bushing) where the film is at its minimum thickness.

Therefore, there is a need to dynamically adjust the film thickness on the inboard end of the bearing, so as the load increases it would be possible to reduce the temperature in that region. This is important as it could reduce a major class of bearing failure called inboard edge wipe.

Prior art is replete with examples that attempt to change the shape of the bearing (static member) to conform to the deformed shape of a shaft or housing. The present invention is different in that the shape of the sleeve and bushing bearing surfaces are not changed in the unloaded condition - in both cases they are cylindrical. Instead, this new concept is to add manufactured features to the sleeve to allow them to deflect as the load increases, but to also control the total deflection. For the purpose of explanation, the desired maximum radial deflection will be calculated as (Bearing Load Rating {F in metric tons} / Hydrodynamic Length {L_{H} in mm}) * **a** wherein **a** is picked to be in the range 0.02 ≤ **a** ≤ 0.04 with a preferable 0.025.

The present invention provides a feature of length *ℓ* on the tapered inner diameter (ID) of the inboard end of a sleeve (e.g., a sleeve used in a rolling mill). There is a "hinge" feature to allow that inboard end to deflect inward and that total deflection is set by the offset on the end calculated as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025.

FIG. 3(B) depicts an implementation of the present invention. In one embodiment, FIG. 3(B) option 1, the present invention discloses a sleeve **300** as used on a roll in a rolling mill, the sleeve having an inboard end **301** and an outboard end **302,** the sleeve comprising: (a) an outer surface **303** shaped like a cylinder having sleeve length *L_{S},* diameter *OD,* hydrodynamic length *L_{H}* and outside diameter *OD;* (b) an inner surface **304** comprised of an inside diameter *ID* at the inboard end and a taper angle **α**: (1) a first portion of length *(L_{S}-* ℓ*)*, the first portion conically shaped having a first ramp portion **304** (which is a portion of the original taper that is part of the inner surface **304);** and (2) a second portion of length ℓ, the second portion comprising: (i) an undercut portion **312** located adjacent to an end of the first portion that is proximate to the inboard end, where **r,** the undercut radius, is preferable defined as 5% of ℓ (310 the second portion of length) but optionally can be within the range 2% to 10%; (ii) a second ramp portion **308** located adjacent to the undercut portion, wherein the second ramp portion allows the sleeve to deflect as load increases at a maximum radial deflection of *δ.* Where ℓ is preferably defined as 25% * L_{H} (hydrodynamic length), but optionally can be within the range 20% to 35%. Also, the value for δ can be preferably calculated as (Bearing Load Rating {F in metric tons} / Hydrodynamic Length {L_{H} in mm}) * **a** wherein **a** is picked to be in the range 0.02 ≤ **a** ≤ 0.04 with **a** preferable 0.025. Alternately, in FIG. 3(B) option 2, instead of a taper from the hinge **312** to the inboard end, the full length ℓ is undercut by a constant amount δ calculated in the same manner as option 1.

In another embodiment, FIG. 3(C) option 1, the present invention discloses a sleeve **300** as used on a roll in a rolling mill, the sleeve having an inboard end **301** and an outboard end **302,** the sleeve comprising: (a) an outer surface **303** shaped like a cylinder having length *L_{S}* and diameter *OD;* (b) an inner surface **304** having of an inside diameter *ID* at the inboard end and a taper angleα, the inner surface comprising: (1) a first portion of length *(L_{S}-ℓ),* the first portion conically shaped having a first ramp portion **304;** and (2) a second portion of length ℓ, the second portion comprising a second ramp portion **308** located adjacent to the first ramp portion **304,** wherein the second ramp portion allows the sleeve to deflect as load increases at a maximum radial deflection of *δ.* Alternately, in FIG. 3(C) option 2, instead of a taper on the second ramp portion **308,** the full length ℓ is undercut by a constant amount δ calculated in the same manner as option 1, above.

The bearing surfaces themselves are cylindrical and deflect under load. That deflection is controllable through manipulating stiffness of the deflection feature. The length ℓ is a function of the hydrodynamic bearing length *L_{H}.*

In one embodiment, FIG. 3(B) option 1, the present invention provides a sleeve for use in a roll in a rolling mill, the sleeve having an inboard end and an outboard end, the sleeve comprising: (a) an outer surface shaped like a cylinder having sleeve length *L_{S},* hydrodynamic length *L_{H},* and outside diameter *OD,* and (b) an inner surface having an inside diameter *ID* at the inboard end and a taper angle**α**, the inner surface comprising: (1) a first portion of length *(L_{S} - ℓ)*, the first portion conically shaped having a first ramp portion; and (2) a second portion of length ℓ, the second portion comprising: (i) an undercut portion having an undercut radius, **r,** the undercut portion located adjacent to an end of the first portion that is proximate to the inboard end; (ii) a second ramp portion located adjacent to the undercut portion, and wherein the second ramp portion allows the sleeve to deflect as load increases at a maximum radial deflection of *δ.* In one embodiment, not covered by the present invention, *δ* is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*. In the same embodiment, the undercut radius **r** is defined as **c** * length ℓ wherein **c,** is picked to be in the range 2% ≤ **c** ≤ 10% with **c** preferable 5%.

In another embodiment, FIG. 3B option 2, the present invention provides a sleeve for use in a roll in a rolling mill, the sleeve having an inboard end and an outboard end, the sleeve comprising: (a) an outer surface shaped like a cylinder having sleeve length *L_{S},* hydrodynamic length *L_{H}* and outside diameter *OD;* and (b) an inner surface having an inside diameter *ID* at the inboard end and a taper angle ***α,*** the inner surface comprising: (1) a first portion of length *(L_{S} -* ℓ*)*, the first portion conically shaped having a first ramp portion; and (2) a second portion of length ℓ, wherein the second portion comprises an undercut radius, r, wherein a full length ℓof the second portion is undercut by a constant amount *δ.* In one embodiment, not covered by the present invention, δ is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*. In the same embodiment, the undercut radius **r** is defined as **c** * length ℓ wherein **c,** is picked to be in the range 2% ≤ **c** ≤ 10% with **c** preferable 5%.

In yet another embodiment, FIG. 3(C) option 1, the present invention provides a sleeve for use in a roll in a rolling mill, the sleeve having an inboard end and an outboard end, the sleeve comprising: (a) an outer surface shaped like a cylinder having sleeve length *L_{S},* hydrodynamic length *L_{H},* and outside diameter *OD;* (b) an inner surface having of an inside diameter *ID* at the inboard end and a taper angleα, the inner surface comprising: (1) a first portion of length *(L_{S} - ℓ)*, the first portion conically shaped having a first ramp portion; and (2) a second portion of length ℓ, the second portion comprising a second ramp portion located adjacent to the first ramp portion, wherein the second ramp portion allows the sleeve to deflect as load increases at a maximum radial deflection of *δ.* In one embodiment, not covered by the present invention, δ is defined as ( Bearing Load Rating {F in metric tons} / Hydrodynamic Length {L_{H} in mm} ) * a wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length ℓ.

In another embodiment, FIG. 3(C) option 2, the present invention provides a sleeve for use in a roll in a rolling mill, the sleeve having an inboard end and an outboard end, the sleeve comprising: (a) an outer surface shaped like a cylinder having sleeve length *L_{S},* a hydrodynamic length *L_{H},* and outside diameter *OD;* (b) an inner surface having of an inside diameter *ID* at the inboard end and a taper angleα, the inner surface comprising: (1) a first portion of length *(L_{S} -* ℓ), the first portion conically shaped having a first ramp portion; and (2) a second portion of length ℓ, wherein a full length ℓ of the second portion is undercut by a constant amount *δ.* In one embodiment, not covered by the present invention, δ is defined as ( Bearing Load Rating {F in metric tons} / Hydrodynamic Length {L_{H} in mm} ) * a wherein a is picked to be in the range 0.02 ≤ **a ≤** 0.04 with a preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ) >* length *ℓ*.

In yet another embodiment, not covered by the present invention, FIG. 3(B) option 1, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* outer diameter *OD,* and hydrodynamic length *L_{H};* and (b) provisioning an inner surface comprising: (1) a first portion of length *(L_{S} -* ℓ), the first portion conically shaped having a first ramp portion; and (2) a second portion of length ℓ, the second portion comprising: (i) an undercut portion having an undercut radius, **r,** the undercut portion located adjacent to an end of the first portion that is proximate to the inboard end; (ii) a second ramp portion located adjacent to the undercut portion, and wherein the second ramp portion allows the sleeve to deflect as load increases at a maximum radial deflection of *δ.* In one embodiment, δ is defined as ( Bearing Load Rating {F in metric tons} / Hydrodynamic Length {L_{H} in mm} ) * **a** wherein **a,** is picked to be in the range 0.02 ≤ **a** ≤ 0.04 with a preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*. In the same embodiment, the undercut radius, **r,** is defined as **c** * length ℓ wherein **c,** is picked to be in the range 2% ≤ **c** ≤ 10% with **c** preferable 5%.

In another embodiment, not covered by the present invention, FIG. 3(B) option 2, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* hydrodynamic length *L_{H}* and outside diameter *OD;* and (b) provisioning an inner surface having of an inside diameter *ID* at the inboard end and a taper angleα, the inner surface comprising: (1) a first portion of length *(L_{S}- ℓ)*, the first portion conically shaped having a first ramp portion; and (2) a second portion of length ℓ, wherein the second portion comprises an undercut radius, r, wherein a full length ℓ of the second portion is undercut by a constant amount *δ.* In one embodiment, δ is defined as ( Bearing Load Rating {F in metric tons} / Hydrodynamic Length {L_{H} in mm} ) * **a** wherein **a** is picked to be in the range 0.02 ≤ **a** ≤ 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length *ℓ*. In the same embodiment, the undercut radius **r** is defined as **c** * length ℓ wherein **c,** is picked to be in the range 2% ≤ **c** ≤ 10% with **c** preferable 5%.

In yet another embodiment, not covered by the present invention, FIG. 3(C) option 1, provides a method for lowering temperature build-up on an inboard side of a sleeve, the sleeve used in a roll in a rolling mill, the sleeve having an inboard end and an outboard end, the method comprising: (a) an outer surface shaped like a cylinder having sleeve length *L_{S} ,* hydrodynamic length *L_{H},* and outside diameter *OD;* (b) an inner surface having of an inside diameter *ID* at the inboard end and a taper angle*α*, the inner surface comprising: (1) a first portion of length *(L_{S} -* ℓ), the first portion conically shaped having a first ramp portion; and (2) a second portion of length ℓ, the second portion comprising a second ramp portion located adjacent to the first ramp portion, wherein the second ramp portion allows the sleeve to deflect as load increases at a maximum radial deflection of *δ.* In one embodiment, δ is defined as ( Bearing Load Rating {F in metric tons} / Hydrodynamic Length {L_{H} in mm} ) * **a** wherein **a** is picked to be in the range 0.02 ≤ **a ≤** 0.04 with **a** preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S}* - *ℓ)* > length ℓ.

In another embodiment, not covered by the present invention, FIG. 3(C) option 2, provides a method for lowering temperature build-up on an inboard side of a sleeve, the sleeve used in a roll in a rolling mill, the sleeve having an inboard end and an outboard end, the method comprising: (a) provisioning an outer surface shaped like a cylinder having sleeve length *L_{S},* a hydrodynamic length *L_{H},* and outside diameter *OD;* (b) provisioning an inner surface having of an inside diameter *ID* at the inboard end and a taper angle*α*, the inner surface comprising: (1) a first portion of length *(L_{S} - ℓ)*, the first portion conically shaped having a first ramp portion; and (2) a second portion of length ℓ, wherein a full length ℓ of the second portion is undercut by a constant amount *δ.* In one embodiment, δ is defined as ( Bearing Load Rating {F in metric tons} / Hydrodynamic Length {L_{H} in mm} ) * **a** wherein **a** is picked to be in the range 0.02 ≤ **a** ≤ 0.04 with a preferable 0.025. In the same embodiment, a value of ℓ is defined as **b** * Hydrodynamic Length {L_{H}}, wherein **b** is picked to be within the range 20% ≤ **b** ≤ 35% with **b** preferable 25%. In the same embodiment, length *(L_{S} - ℓ)* > length ℓ.

### CONCLUSION

A system and method have been shown in the above embodiments for the effective implementation of a bearing temperature reduction through sleeve modification. While various preferred embodiments have been shown and described, it will be understood that there is no intent to limit the invention by such disclosure, but rather, it is intended to cover all modifications falling within the scope of the invention, as defined in the appended claims.

## Claims

1. A sleeve (300) for use in a roll of a rolling mill, the sleeve (300) having an inboard end (301) and an outboard end (302), the sleeve (300) comprising:
(a) an outer surface (303) shaped like a cylinder having sleeve length *L_{S},* hydrodynamic length *L_{H},* and outside diameter *OD;* and
(b) an inner surface (304) having of an inside diameter *ID* at the inboard end (301) and a taper angleα, the inner surface (304) comprising:
(1) a first portion of length *(L_{S}- ℓ),* the first portion conically shaped having a first ramp portion, the first portion and the first ramp portion having the taper angle α; and
(2) a second portion (310) of length ℓ, the second portion (310) comprising:
(i) an undercut portion (312) having an undercut radius, r, the undercut portion (312) located adjacent to an end of the first portion that is proximate to the inboard end (301);
(ii) a second ramp portion (308) located adjacent to the undercut portion (312),
**characterized in that**
the second ramp portion (308) is tapered by an amount δ in addition to the taper angle α, and
load increases at a maximum radial deflection corresponding to the amount *δ.*

2. A sleeve (300) for use in a roll of a rolling mill, the sleeve (300) having an inboard end (301) and an outboard end (302), the sleeve (300) comprising:
(a) an outer surface (303) shaped like a cylinder having sleeve length *L_{S} ,* a hydrodynamic length *L_{H},* and outside diameter *OD;*
(b) an inner surface (304) having of an inside diameter *ID* at the inboard end (301) and a taper angleα, the inner surface (304) comprising:
(1) a first portion of length *(L_{S}-ℓ),* the first portion conically shaped having a first ramp portion, the first portion and the first ramp portion having the taper angle ***α*;** and
(2) a second portion (310) of length *l*, the second portion (310) comprising a second ramp portion (308) located adjacent to the first ramp portion, **characterized in that**
the second ramp portion (308) is tapered by an amount *δ* in addition to the taper angle ***α*,** and
the second ramp (308) portion allows the sleeve (300) to deflect as load increases at a maximum radial deflection corresponding to the amount *δ.*

## Patentansprüche

1. Hülse (300) zur Verwendung in einer Walze eines Walzwerks, wobei die Hülse (300) ein inneres Ende (301) und ein äußeres Ende (302) aufweist, wobei die Hülse (300) Folgendes umfasst:
(a) eine zylinderförmige Außenfläche (303) mit einer Hülsenlänge L_{S}, einer hydrodynamischen Länge L_{H} und einem Außendurchmesser OD; und
(b) eine Innenfläche (304) mit einem Innendurchmesser ID an dem inneren Ende (301) und einem Kegelwinkel α, wobei die Innenfläche (304) Folgendes umfasst:
(1) einen ersten Abschnitt einer Länge (L_{S}- *ℓ*)*,* wobei der erste Abschnitt konisch geformt einen ersten Rampenabschnitt aufweist, wobei der erste Abschnitt und der erste Rampenabschnitt den Kegelwinkel α aufweisen; und
(2) einen zweiten Abschnitt (310) einer Länge ℓ, wobei der zweite Abschnitt (310) Folgendes umfasst:
(i) einen Hinterschneidungsabschnitt (312) mit einem Hinterschneidungsradius r, wobei der Hinterschneidungsabschnitt (312) an ein Ende des ersten Abschnitts angrenzend angeordnet ist, das dem inneren Ende (301) nahe ist;
(ii) einen zweiten Rampenabschnitt (308), der an den Hinterschneidungsabschnitt (312) angrenzend angeordnet ist,
**dadurch gekennzeichnet, dass**
der zweite Rampenabschnitt (308) zusätzlich zu dem Kegelwinkel α um einen Betrag δ verjüngt ist und
eine Last bei einer maximalen radialen Auslenkung entsprechend dem Betrag δ ansteigt.

2. Hülse (300) zur Verwendung in einer Walze eines Walzwerks, wobei die Hülse (300) ein inneres Ende (301) und ein äußeres Ende (302) aufweist, wobei die Hülse (300) Folgendes umfasst:
(a) eine zylinderförmige Außenfläche (303) mit einer Hülsenlänge L_{S}, einer hydrodynamischen Länge L_{H} und einem Außendurchmesser OD;
(b) eine Innenfläche (304) mit einem Innendurchmesser ID an dem inneren Ende (301) und einem Kegelwinkel α, wobei die Innenfläche (304) Folgendes umfasst:
(1) einen ersten Abschnitt einer Länge (L_{S}- *ℓ*)*,* wobei der erste Abschnitt konisch geformt einen ersten Rampenabschnitt aufweist, wobei der erste Abschnitt und der erste Rampenabschnitt den Kegelwinkel α aufweisen; und
(2) einen zweiten Abschnitt (310) einer Länge l, wobei der zweite Abschnitt (310) einen zweiten Rampenabschnitt (308) umfasst, der an den ersten Rampenabschnitt angrenzend angeordnet ist, **dadurch gekennzeichnet, dass**
der zweite Rampenabschnitt (308) zusätzlich zu dem Kegelwinkel α um einen Betrag δ verjüngt ist und
der zweite Rampenabschnitt (308) der Hülse (300) ermöglicht, mit ansteigender Last bei einer maximalen radialen Auslenkung entsprechend dem Betrag δ auszulenken.

## Revendications

1. Manchon (300) destiné à être utilisé dans un rouleau d'un laminoir, le manchon (300) présentant une extrémité intérieure (301) et une extrémité extérieure (302), le manchon (300) comprenant :
(a) une surface externe (303) en forme de cylindre présentant une longueur de manchon *L_{S}*, une longueur hydrodynamique *L_{H}* et un diamètre extérieur *OD,* et
(b) une surface interne (304) présentant un diamètre intérieur *ID* au niveau de l'extrémité intérieure (301) et un angle d'effilement α, la surface interne (304) comprenant :
(1) une première partie de longueur (*L_{S} -l*)*,* la première partie en forme conique présentant une première partie de rampe, la première partie et la première partie de rampe présentant l'angle d'effilement α, et
(2) une deuxième partie (310) de longueur *l*, la deuxième partie (310) comprenant :
(i) une partie en contre-dépouille (312) présentant un rayon de contre-dépouille, r, la partie en contre-dépouille (312) étant située adjacente à une extrémité de la première partie qui est à proximité de l'extrémité intérieure (301) ;
(ii) une deuxième partie de rampe (308) située adjacente à la partie en contre-dépouille (312),
**caractérisé en ce que**
la deuxième partie de rampe (308) est effilée d'une valeur δ en plus de l'angle d'effilement α, et
la charge augmente à une déviation radiale maximale correspondant à la valeur *δ.*

2. Manchon (300) destiné à être utilisé dans un rouleau d'un laminoir, le manchon (300) présentant une extrémité intérieure (301) et une extrémité extérieure (302), le manchon (300) comprenant :
(a) une surface externe (303) en forme de cylindre présentant une longueur de manchon *L_{S}*, une longueur hydrodynamique *L_{H}* et un diamètre extérieur *OD ;*
(b) une surface interne (304) présentant un diamètre intérieur *ID* au niveau de l'extrémité intérieure (301) et un angle d'effilement α, la surface interne (304) comprenant :
(1) une première partie de longueur (*L_{S}-l*)*,* la première partie en forme conique présentant une première partie de rampe, la première partie et la première partie de rampe présentant l'angle d'effilement α, et
(2) une deuxième partie (310) de longueur *l*, la deuxième partie (310) comprenant une deuxième partie de rampe (308) située adjacente à la première partie de rampe,
**caractérisé en ce que**
la deuxième partie de rampe (308) est effilée d'une valeur *δ* en plus de l'angle d'effilement *α*, et
la deuxième partie de rampe (308) permet au manchon (300) de dévier au fur et à mesure que la charge augmente à une déviation radiale maximale correspondant à la valeur *δ*.
